(19) Europäisches Patentamt
European Patent Office
Office européen des brevets

(11) **EP 1 793 440 A1**

(12) **EUROPEAN PATENT APPLICATION**
published in accordance with Art. 158(3) EPC

(43) Date of publication:
06.06.2007 Bulletin 2007/23

(51) Int Cl.:
*H01M 8/04* (2006.01)

(21) Application number: 05780952.7

(22) Date of filing: 25.08.2005

(86) International application number:
PCT/JP2005/015428

(87) International publication number:
WO 2006/025254 (09.03.2006 Gazette 2006/10)

(84) Designated Contracting States:
DE FR GB

(30) Priority: 02.09.2004 JP 2004256149

(71) Applicant: MATSUSHITA ELECTRIC INDUSTRIAL CO., LTD.
Osaka 571-8501 (JP)

(72) Inventors:
• TAKADA, Masahiroc/o Matsushita Electric Industrial
Osaka 540-6319 (JP)

• KOZU, Katsumi c/o Matsushita Electric Industrial
Osaka 540-6319 (JP)
• ICHINOSE, Toshihiko c/o Matsushita Electric Ind
Osaka 540-6319 (JP)

(74) Representative: Eisenführ, Günther
Eisenführ, Speiser & Partner
Patentanwälte Rechtsanwälte
Postfach 10 60 78
28060 Bremen (DE)

(54) **FUEL CELL SYSTEM**

(57) There is provided a fuel cell system which reduces voltage variations of a plurality of fuel cells and stabilizes a generated power of a fuel cell stack. A fuel cell system according to the invention includes a fuel cell stack having a plurality of fuel cells connected in series, a fuel supply device, an air supply device and a controller. The controller sets at least one of a fuel supply amount and an air supply amount for each fuel cell based on each voltage of the plurality of fuel cells so that each voltage variation of the plurality of fuel cells may be minimized, and the fuel supply device supplies fuel to each of the fuel cells based on the fuel supply amount of each fuel cell, and/or the air supply device supplies air to each of the fuel cells based on the air supply amount of each fuel cell.

Fig.1

EP 1 793 440 A1

**Description**

TECHNICAL FIELD

The present invention relates to a fuel cell system suitable for a power supply of an electronic device and the like.

BACKGROUND ART

Recently, a fuel cell which can continuously supply a power for a long time is remarked as a power supply of an electronic device and the like. The fuel cell has generally a fuel electrode and an air electrode arranged on both sides of an electrolyte layer. When hydrogen is applied to the fuel electrode and oxygen is applied to the air electrode, an electrochemical reaction is produced and a DC (direct current) current is generated. Since an electromotive force of the fuel cell which is a minimum unit for generating the current is small, it is necessary to connect a plurality of fuel cells in series to provide a power required by a device using the fuel cells as a power source. When the plurality of fuel cells are stacked to make a fuel cell stack, a great power is provided.

Although the current of the fuel cell can be a desired value by enlarging a reaction area, the reaction area cannot be enlarged because the power supply of a portable electronic device is required to be miniaturized. In order to produce a lot of reactions actively in a limited reaction area, an operation control such that fuel is smoothly supplied to each fuel cell according to a power which is required by a load device, is required.

An operating method and an operation device for a fuel cell in a first conventional example which can operate efficiently and securely are disclosed in a patent document 1. When a load of an air compressor of an air supply source is reduced or supply of fuel gas flux is extremely reduced to enhance efficiency of a fuel cell system, a cell voltage is lowered or reversed and a fuel cell is damaged in some cases. Therefore, the operating method and device for the fuel cell in the first conventional example monitor a fuel cell voltage of the fuel cell to control a load current, an air supply amount, an air pressure, a fuel gas supply amount, and fuel gas pressure so that a standard deviation of the fuel cell voltage may not exceed a predetermined value but the standard deviation may follow the predetermined value. Thus, the operation method and the operating device in the first conventional example operate safely the fuel cell without being damaged, and enhance efficiency of the fuel cell system.

A fuel cell system in another conventional example is disclosed in a patent document 2. According to the fuel cell system in this conventional example, a hydrogen supply amount is varied according to a required power by a load and a voltage control is performed so that each output voltage of fuel cells constituting a fuel cell stack becomes a predetermined cell voltage. Thus, a maximal power according to each hydrogen supply amount can be obtained. Even when the fuel cells constituting the fuel cell stack have different voltage characteristics, over discharge caused by a voltage drop can be prevented.

Patent Document 1: JP-A-2000-208161
Patent Document 2: JP-A-2002-184443

DISCLOSURE OF THE INVENTION

Problems to be solved by the Invention

The operating method and operating device for the fuel cell in the first conventional example monitor each voltage of a plurality of fuel cells constituting a fuel cell stack and control amounts of fuel and air to be supplied to the fuel cell stack. The fuel cell system in another conventional example measures each voltage of a plurality of fuel cells constituting a fuel cell stack and controls a hydrogen amount to be supplied to the fuel cell stack and a target voltage of the cell. However, according to the conventional examples, it is difficult to determine a total amount of fuel or air to be supplied to the fuel cell stack according to a difference between a generated power and a required power, and to increase or decrease a fuel supply amount or air supply amount every fuel cell in order to reduce a voltage variation of each fuel cell while keeping the total amount of the fuel or air unchanged. In order to supply fuel having a regular concentration to each of a plurality of fuel cells constituting a fuel cell stack uniformly with high precision, it is desirable that each fuel cell can be supplied with fuel individually.

It is an object of the present invention to provide a fuel cell system which reduces voltage variations of a plurality of fuel cells constituting a fuel cell stack and stabilizes a power generated by the fuel cell stack.

Means for solving the problems

In order to solve the above problems, the present invention has the following configurations. A fuel cell system according to an aspect of the present invention has a fuel cell stack having a plurality of fuel cells connected in series, a fuel supply device that supplies fuel to each of the fuel cells based on a fuel supply amount which is a target value, an air supply device that supplies air to each of the fuel cells based on an air supply amount which is a target value, and a controller that determines the fuel supply amount and the air supply amount based on a power which is required by a load device and a voltage of each of the fuel cells, and the controller sets at least one of the fuel supply amount and the air supply amount for each fuel cell based on the voltage of each of the fuel cells so that a voltage variation of each of the fuel cells is minimized, and the fuel supply device supplies fuel to each of the fuel cells based on the fuel supply amount for each fuel cell, and/or the air supply device supplies air to each of the fuel cells based on the air supply amount for each fuel cell.

According to the present invention, the fuel cell system can reduce the voltage variations of the plurality of fuel cells constituting the fuel cell stack and stabilize the generated power of the fuel cell stack. According to the present invention, the fuel cell system can prevent a voltage of any fuel cell from being lowered and prevent any fuel cell from deteriorating due to variations in characteristics of the plurality of fuel cells constituting the fuel cell stack or variations in characteristics of the fuel supply device. According to the present invention, the fuel cell system can prevent a current of any one of the plurality of fuel cells constituting the fuel cell stack from being lowered and prevent a generated power of the fuel cell stack from being lowered.

In the fuel cell system according to another aspect of the present invention, the controller may calculate a voltage deviation which is a difference between the voltage of each of the fuel cells and an average value of the voltages of the plurality of fuel cells every predetermined time, and increase or decrease the fuel supply amount to each of the fuel cells according to the voltage deviation while keeping a total fuel supply amount unchanged, and/or increase or decrease the air supply amount to each of the fuel cells according to the voltage deviation while keeping a total air supply amount unchanged.

According to the present invention, the fuel cell system can reduce the voltage variations of the plurality of fuel cells while keeping an operating point of the fuel cell stack constant.

The fuel cell system according to still another aspect of the present invention may further have a temperature measuring device that measures a temperature of the fuel cell stack, and the controller may have a total fuel supply amount table for calculating the total fuel supply amount and/or a total air supply amount table for calculating the total air supply amount based on the temperature of the fuel cell stack and the required power of the load device. The controller may receive the temperature of the fuel cell stack from the temperature measuring device and the required power from the load device and calculate the total fuel supply amount and/or the total air supply amount based on the total fuel supply amount table and/or the total air supply amount table to set an amount which is obtained by dividing the total fuel supply amount and/or the total air supply amount by the total number of the fuel cells to an initial value of the fuel supply amount and/or the air supply amount of each of the fuel cells. Then, the controller may repeat calculating the voltage deviation which is the difference between the voltage of each of the fuel cells and the average value of the voltages of the plurality of fuel cells and obtaining the target fuel supply amount and/or the target air supply amount by subtracting a value obtained by multiplying the voltage deviation by a predetermined value, from the fuel supply amount and/or the air supply amount of each of the fuel cells every predetermined time.

According to the present invention, the fuel cell system can reduce the voltage variations of the plurality of fuel cells while matching the generated power of the fuel cell stack to the required power of the load device as much as possible.

In the fuel cell system according to still another aspect of the present invention, the controller may calculate a voltage deviation which is a difference between the voltage of each of the fuel cells and an average value of the voltages of the plurality of fuel cells every predetermined time, and when a maximum value of absolute values of the voltage deviations of the plurality of fuel cells becomes smaller than a predetermined value, the controller may calculate a generated power of the fuel cell stack within a predetermined time and increase or decrease a total fuel supply amount or a total air supply amount according to a power difference between the generated power and the required power of the load device.

According to the present invention, the fuel cell system can prevent the voltage of any fuel cell from being lowered and any fuel cell from deteriorating due to variations in characteristics of the plurality of fuel cells constituting the fuel cell stack or variations in characteristics of the fuel supply device. According to the present invention, the fuel cell system can conform the generated power of the fuel cell stack to the required power of the load device as much as possible.

In the fuel cell system according still another aspect of the present invention, the total fuel supply amount or the total air supply amount may be increased or decreased by adding a value obtained by multiplying the power difference between the generated power of the fuel cell stack and the required power of the load device by a predetermined value, to the total fuel supply amount or the total the air supply amount.

According to the present invention, the fuel cell system can conform the generated power of the fuel cell stack to the required power of the load device as much as possible.

The fuel cell system according to still another aspect of the present invention may further has a power converter that controls so that a voltage or current of the fuel cell stack becomes a target voltage or target current determined by the controller, and supplies the power from the fuel cell stack to the load device. When a minimum voltage value of the voltages of the plurality of fuel cells becomes smaller than a predetermined voltage value, the controller may increase the target voltage to cause the power converter to increase the voltage of the fuel cell stack, or the controller may decrease the target current to cause the power converter to decrease the current of the fuel cell stack.

According to the present invention, the fuel cell system can prevent the voltage of any fuel cell from being lowered and any fuel cell from deteriorating due to the variations in characteristics of the fuel cells constituting the fuel cell stack or variations in characteristics of the fuel supply device. According to the present invention, the fuel cell system can prevent the current from being lowered by any one of the plurality of fuel cells constituting the fuel cell stack and prevent the generated power of the fuel cell stack from being lowered.

In the fuel cell system according to still another aspect of the present invention, when the minimum value of the voltages of the plurality of fuel cells becomes lower than the predetermined voltage value, the controller may obtain a value by multiplying a voltage difference between the minimum voltage value and the predetermined voltage value by a predetermined value and add the obtained value to the target voltage and the power converter may increase the voltage of the fuel cell stack based on the target voltage, or the controller may obtain a value by multiplying the voltage difference between the minimum voltage value and the predetermined voltage value by a predetermined value and subtract the obtained value from the target current and the power converter may decrease the current of the fuel cell stack based on the target current.

According to the present invention, the fuel cell system can prevent the voltage of any fuel cell from being lowered and any fuel cell deteriorating due to variations in characteristics of the fuel cells constituting the fuel cell stack or variations in characteristics of the fuel supply device. According to the present invention, the fuel cell system can prevent the current from being lowered by any one of the plurality of fuel cells constituting the fuel cell stack and prevent the generated power of the fuel cell stack from being lowered.

Effects of the Invention

According to the present invention, the fuel cell system can reduce the voltage variations of the plurality of fuel cells constituting the fuel cell stack and stabilize the generated power of the fuel cell stack by increasing or decreasing the fuel supply amount or the air supply amount every fuel cell.

In addition, according to the present invention, the fuel cell system can prevent the voltage of any fuel cell from being lowered and any fuel cell from deteriorating due to the variations in characteristics of the fuel cells constituting the fuel cell stack or variations in characteristics of the fuel supply device.

In addition, according to the present invention, the fuel cell system can prevent the current from being lowered by any one of the plurality of fuel cells constituting the fuel cell stack and prevent the generated power of the fuel cell stack from being lowered.

In addition, according to the present invention, the fuel cell system can conform the generated power of the fuel cell stack to the required power of the load device as much as possible.

BRIEF DESCRIPTION OF THE DRAWINGS

Fig. 1 is a schematic configurational diagram showing a fuel cell system according to an embodiment 1 of the present invention;
Fig. 2 is a flowchart showing control algorithm of the fuel cell system according to the embodiment 1 of the present invention;
Fig. 3 is a view showing a relation between a fuel supply amount and a maximum output power of a fuel cell of the fuel cell system according to the embodiment 1 of the present invention;
Fig. 4 is a view showing a relation between a required power and a total fuel supply amount of the fuel cell system according to the embodiment 1 of the present invention;
Fig. 5 is a schematic configurational diagram showing a fuel cell system according to an embodiment 2 of the present invention;
Fig. 6 is a flowchart showing control algorithm of the fuel cell system according to the embodiment 2 of the present invention;
Fig. 7 is a view showing a relation between an air supply amount and a maximum output power of a fuel cell of the fuel cell system according to the embodiment 2 of the present invention;
Fig. 8 is a view showing a relation between a required power and a total air supply amount of the fuel cell system according to the embodiment 2 of the present invention; and

Fig. 9 is a view showing a current-voltage characteristic and a current-power characteristic of the fuel cell with respect to a variation of air supply amount of the fuel cell system according to the embodiment 2 of the present invention.

Description of reference numerals

| 100 | fuel cell stack |
|---|---|
| 101,501 | fuel supply device |
| 102,502 | air supply device |
| 103 | power converter |
| 104 | secondary cell |
| 105 | voltage measuring device |
| 106 | current measuring device |
| 107 | temperature measuring device |
| 108 | controller |
| 109 | load device |
| 110 | fuel cell |

BEST MODE FOR CARRYING OUT THE INVENTION

An embodiment of the best mode for carrying out the the present invention will be described with reference to the drawings hereinafter.

<<Embodiment 1>>

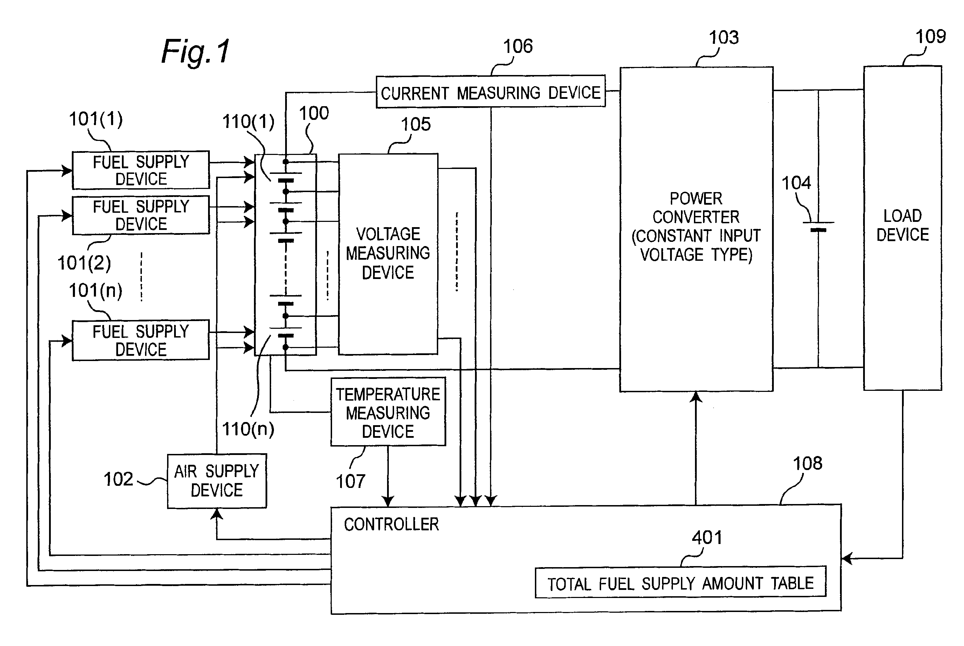

A fuel cell system according to an embodiment 1 of the present invention will be described with reference to Figs. 1 to 4. Fig. 1 is a diagram showing a configuration of the fuel cell system according to the embodiment 1 of the present invention. As shown in Fig. 1, the fuel cell system according to the embodiment 1 of the present invention has a fuel cell stack 100 having a plurality of fuel cells, fuel supply devices 101(1) to 101(n) (n is two or more arbitrary positive integers) for supplying fuel to each fuel cell of the fuel cell stack 100, an air supply device 102 for supplying air to each fuel cell of the fuel cell stack 100, a power converter 103 for controlling a voltage of the fuel cell stack 100, a secondary cell 104 for making up for a short power when a generated power of the fuel cell stack 100 is less than a power which is required by a load device, a voltage measuring device 105 for measuring a voltage of each fuel cell of the fuel cell stack 100, a current measuring device 106 for measuring a current of the fuel cell stack 100, a temperature measuring device 107 for measuring a temperature of the fuel cell stack 100, and a controller 108 for controlling the fuel cell system. The fuel cell system according to the embodiment supplies a power to a load device 109.

The fuel cell stack 100 has n (n is two or more arbitrary positive integers) fuel cells 110(1) to 110(n) connected in series. Each of the fuel cells 110(1) to 110(n) has a fuel electrode and an air electrode arranged on both sides of an electrolyte layer (not shown). When fuel (methanol, for example) for generating hydrogen or a hydrogen ion is applied to the fuel electrode and oxygen is applied to the air electrode, an electrochemical reaction is produced and a DC (direct current) current is generated. The fuel cells 110(1) to 110(n) are supplied with fuel of which amount is set every fuel cell from the fuel supply devices 101(1) to 101(n), respectively. Each of the fuel cells 110(1) to 110(n) is supplied with the same amount of air from the air supply device 102.

Each of the fuel supply devices 101(1) to 101(n) receives a fuel supply amount for each fuel cell from the controller 108 and supplies fuel to each of the fuel cells 110(1) to 110(n) based on the amount, respectively.

The air supply device 102 receives an air supply amount from the controller 108 and supplies air to the fuel cells 110(1) to 110(n) based on the amount. The air supply amount for each of all the fuel cells 110(1) to 110(n) is the same.

The power converter 103 is a constant input voltage type of DC-DC converter in the embodiment 1. The power converter 103 controls a voltage of the fuel cell stack 100 (a total voltage of the fuel cells 110(1) to 110(n) connected in series) so that the voltage of the fuel cell stack 100 may become a target voltage set by the controller 108.

The secondary cell 104 is connected to an output terminal of the power converter 103. The secondary cell 104 is a lithium-ion secondary battery in the embodiment 1. The secondary cell 104 discharges and supplies a power to the load device 109 when the generated power of the fuel cell stack 100 is not sufficient for the required power of the load device 109. The fuel cell system according to the present invention sets a target voltage of the fuel cell stack 100 and a total fuel supply amount according to a required power so that the generated power of the fuel cell stack 100 may coincide with a required power of the load device 109, however, the generated power of only the fuel cell stack cannot immediately follow the required power of the load device 109. Therefore, the secondary cell compensates the power of a short amount by discharging. The secondary cell 104 is charged by a remaining power (which is obtained by subtracting the generated power from the required power) when the generated power of the fuel cell stack 100 is more than the required power of the load device 109.

The voltage measuring device 105 measures each voltage of n fuel cells 110(1) to 110(n) and transmits n measured voltage values to the controller 108. The current measuring device 106 measures an output current of the fuel cell stack 100 and transmits the measured current value to the controller 108 and the power converter 103. The temperature measuring device 107 measures the temperature of the fuel cell stack 100 and transmits it to the controller 108.

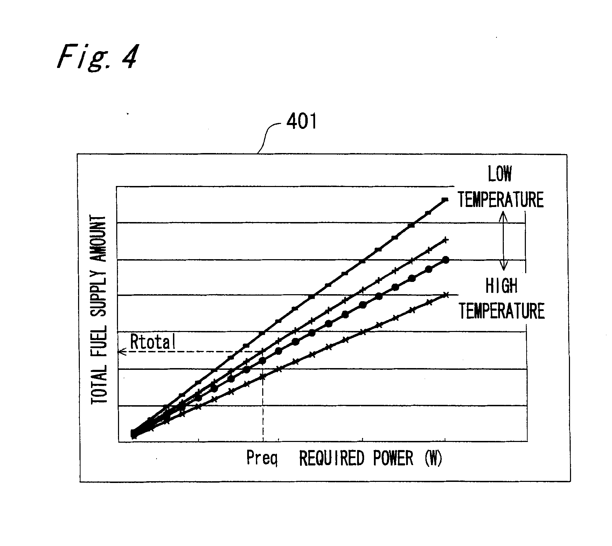

The controller 108 receives the required power of the load device 109 and determines the target voltage of the fuel cell stack 100 according to the required power and outputs the target voltage to the power converter 103. The controller 108 has a total fuel supply amount table 401 (Fig. 4). Fig.4 will be described below. The controller 108 receives the required power of the load device 109 and the temperature measured by the temperature measuring device 107 and calculates a total fuel supply amount to be supplied to the fuel cells 110(1) to 110(n) based on the total fuel supply amount table 401.

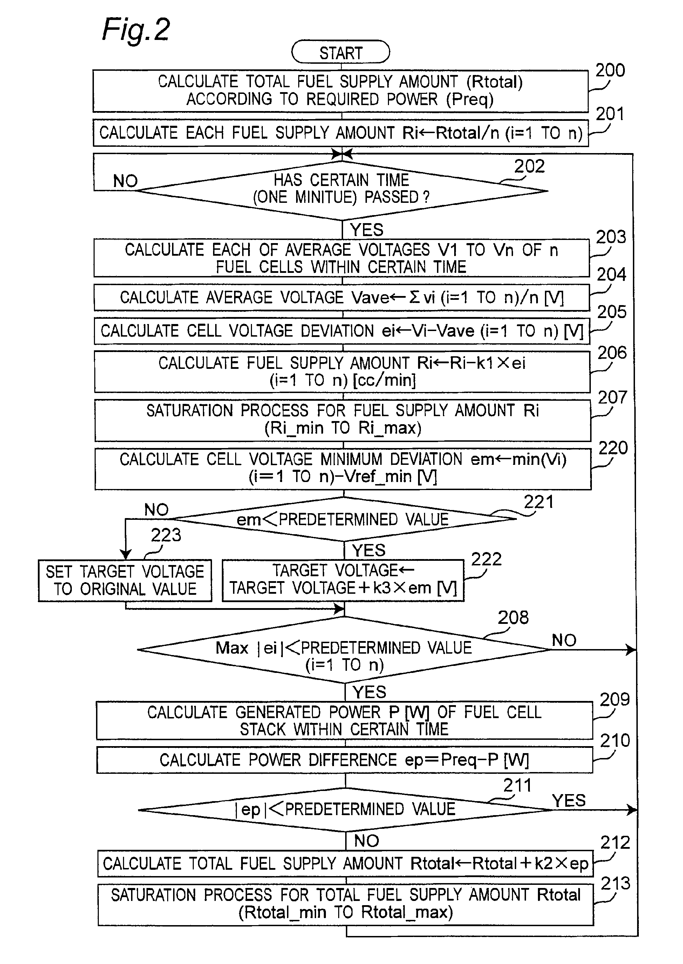

The controller 108 receives voltage values of n fuel cells 110(1) to 110(n) outputted from the power converter 105 and determines a fuel supply amount to be supplied to each of n fuel cells based on the voltage values individually. The sum of fuel supply amounts for n fuel cells is equivalent to the total fuel supply amount. A method of calculating the fuel supply amount is shown in detail in Fig. 2. Fig.2 will be described below. The controller 108 outputs n fuel supply amounts to the corresponding fuel supply devices 101(1) to 101(n), respectively. The controller 108 outputs a predetermined air supply amount to the air supply device 102.

The load device 109 is connected to both ends of the secondary cell. In this embodiment 1, the load device 109 is a notebook computer. The load device 109 outputs the required power to the controller 108. The load device 109 is supplied with a total power of the power output from the fuel cell stack 100 and the power discharged from the secondary cell 104 to operate.

According to the fuel cell system constituted as described above in this embodiment, when a voltage variation of each cell of the fuel cells 110(1) to 110(n) is generated due to a variation in the fuel supply amount or a variation in a fuel cell characteristic, the voltage variation of the fuel cell is to be reduced. The present invention reduces the voltage variations of the fuel cells to prevent deterioration of the fuel cell and stabilize the generated power of the fuel cell stack by controlling the fuel supply amount for each fuel cell.

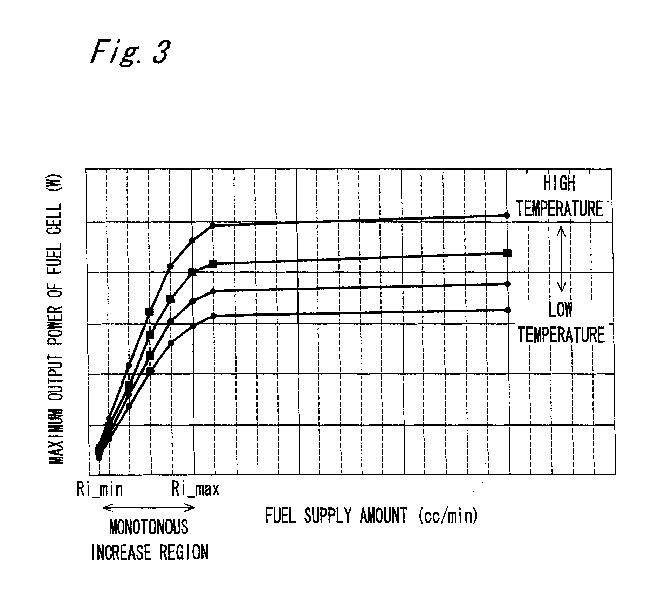

Fig. 3 is a view showing a relation between a fuel supply amount supplied to the fuel cell and a maximum output power of the fuel cell. In Fig. 3, a horizontal axis shows the fuel supply amount (cc/min) and a vertical axis shows the maximum output power (W). As shown in Fig. 3, until the fuel supply amount reaches a predetermined fuel supply amount (Ri_max), the maximum output power of the fuel cell is increased according to increase of the fuel supply amount supplied to each of the fuel cells 110(1) to 110(n). According to the fuel cell system in the embodiment 1 of the present invention, the fuel is supplied to each fuel cell within this monotonous increase region (Ri_ min ≤ fuel supply amount ≤ Ri_max).

Fig. 4 is the total fuel supply amount table 401 showing a relation between the required power and the total fuel supply amount in the fuel cell system according to the embodiment 1 of the present invention. In Fig. 4, a horizontal axis shows the required power from the load device 109 and a vertical axis shows the total fuel supply amount to be supplied to the fuel cell stack 100. The relation between the required power and the total fuel supply amount is varied according to a temperature. As shown in Fig. 4, the lower the temperature of the fuel cell stack is, the more the total fuel supply amount for satisfying the required power by the load device is.

Fig. 2 is a flowchart showing control algorithm of the fuel cell system according to the embodiment 1 of the present invention. First, the controller 108 receives a required power (Preq) from the load device 109 and a temperature measure value (T1) of the fuel cell stack 100 from the temperature measuring device 107 and calculates a total fuel supply amount (Rtotal) with reference to the total fuel supply amount table 401 (step 200). At this time, the controller 108 determines a target voltage V0 of the fuel cell stack 100 based on the required power and outputs the target voltage V0 to the power converter 103.

The controller 108 sets a value obtained by dividing the total fuel supply amount (Rtotal) by the number (n) of the fuel cells to an initial value of the fuel supply amount of each fuel cell (Ri←Rtotal/n (i = 1 to n)) (step 201) .

The fuel supply devices 101(1) to 101(n) supply fuel to the fuel cells 110(1) to 110(n), respectively according to the fuel supply amount (Ri) (i = 1 to n) set by the controller 108. The air supply device 102 supplies air to each of the fuel cells 110(1) to 110(n) uniformly according to the constant air supply amount set by the controller 108. Each of the fuel cells 110(1) to 110(n) is supplied with the fuel and air and generates a power. The power converter 103 receives the voltage of the fuel cell stack 100 and controls so that the voltage of the fuel cell stack becomes the target voltage.

Then, it is determined whether a certain time (one minute in the embodiment 1) has passed or not (step 202). Until the certain time has passed, each fuel cell is supplied with fuel of the fuel supply amount of the initial value. When the certain time has passed, respective average voltages (V1 to Vn) of the fuel cells within the certain time are calculated (step 203). Then an average voltage (Vave) of n voltages (V1 to Vn) is calculated (step 204). A cell voltage deviation (ei) which is a difference between each of the voltages (V1 to Vn) and the average voltage (Vave) is calculated every fuel cell (ei = Vi - Vave (i = 1 to n)) (step 205).

Then, the fuel supply amount (Ri) to each fuel cell is calculated again based on the cell voltage deviation (ei) (Ri = Ri - k1 × ei) (step 206). Here, k1 designates a predetermined positive constant [cc/min/V]. The higher the voltage of the fuel cell is, the smaller the fuel supply amount (Ri) is. The lower the voltage of the fuel cell is, the greater the fuel supply amount (Ri) is. As a result, while the total fuel supply amount (Rtotal) supplied to all of the fuel cells is not changed, the fuel supply amount (Ri) supplied to each fuel cell can be changed depending on each fuel cell voltage deviation (ei). The reason why the total fuel supply amount is not changed at the step 206 is shown by the following equations.

$$
\begin{aligned}
\Sigma Ri &= \Sigma Ri - k1\Sigma ei \\
&= \Sigma Ri - k1(\Sigma Vi - nVave) \\
&= \Sigma Ri - k1 \times 0 \\
&= \Sigma Ri \\
&= Rtotal
\end{aligned}
$$

A saturation process for the fuel supply amount (Ri) is performed so that the fuel supply amount (Ri) is controlled within the monotonous increase region (which is a region in which the generated power of the fuel cell is monotonously increased according to increase of the fuel supply amount to the fuel cell (Fig. 3)) (step 207). This saturation process is such that when the fuel supply amount (Ri) is less than the minimum fuel supply amount (Ri_min), Ri is set to the Ri_min and when the fuel supply amount (Ri) is more than the maximum fuel supply amount (Ri_max), Ri is set to the Ri_max. The reason is such that even when the fuel more than the maximum fuel supply amount (Ri_max) is supplied to the fuel cell, the generated power is not increased. Thus, the fuel supply devices 101(1) to 101(n) supply the fuel to the fuel cells 110(1) to 110(n), respectively based on the fuel supply amount (Ri) (i = 1 to n) after the saturation process.

Here, in order to prevent the fuel cell from being damaged when the minimum voltage value of the fuel cells 110(1) to 110(n) is less than a predetermined value, the controller 108 resets the target voltage of the fuel cell stack 100 to be outputted to the power converter 103 (steps 220 to 223).

First, a cell minimum voltage deviation (em) between a minimum value (min(Vi) (i = 1 to n)) of the voltages of the fuel cells 110(1) to 110(n) and a predetermined value (Vref_min) is calculated (em←min (Vi) (i = 1 to n) - Vref_min) (step 220). Then, it is determined whether the cell minimum voltage deviation (em) is smaller than a predetermined value or not (step 221). When the cell minimum voltage is smaller than the predetermined value, the target voltage of the fuel cell stack 100 is increased (target voltage←target voltage + k3 × em) (step 222). Here, k3 is a predetermined coefficient. Thus, the controller 108 increases the target voltage to cause the power converter 103 to increase the voltage of the fuel cell stack 100 such that the voltage of the fuel cell stack 100 becomes equivalent to the new target voltage set at the step 222. Thus, it is prevented that the voltage of the fuel cell becomes less than the predetermined value and over discharge is generated and the electrolyte film of the fuel cell is damaged or deteriorates. When the cell voltage minimum deviation is the predetermined value or more, the target voltage is set to the original value V0 again (step 223) .

Next, it is determined whether a maximum value of the absolute values of n voltage deviations (ei (i = 1 to n)) which shows voltage variations of the fuel cells 110(1) to 110(n) is smaller than a predetermined value or not (step 208). When the maximum absolute value of n voltage deviations is not less than the predetermined value, it is determined that the voltage variations of n fuel cells are large and the operation is returned to the step 202. The operations from the steps 202 to 223 are repeated until the voltage variations of the fuel cells 110(1) to 110(n) are reduced.

Meanwhile, when the maximum absolute value of n voltage deviations is smaller than the predetermined value, it is determined that the voltage variations of the fuel cells 110(1) to 110(n) are reduced and a generated power (P) (power (P) = total voltage (Σvi) × current) of the fuel cell stack 100 within a latest predetermined time (a certain time) is calculated (step 209).

Then, a power difference (ep) between the required power (Preq) of the load device 109 and the generated power (P) of the fuel cell stack 100 is calculated (step 210). Then, it is determined whether an absolute value of the power difference (ep) is smaller than a predetermined value or not (step 211). When the absolute value of the power difference (ep) is smaller than the predetermined value, it is determined that the present generated power is satisfactory, and the operation is returned to the step 202.

When the absolute value of the power difference (ep) is not less than the predetermined value, it is determined that the total fuel supply amount is excessive or deficient, and the total fuel supply amount is calculated again according to the power difference (Rtotal←Rtotal + k2 × ep) (step 212). Here, k2 is a predetermined positive constant [cc/min/V]. More specifically, when the generated power (P) of the fuel cell stack 100 is smaller than the required power (Preq), it is determined that the fuel supply amount is deficient, and the total fuel supply amount (Rtotal) is increased. Meanwhile, when the generated power (P) is greater than the required power (Preq), it is determined that the fuel supply amount is excessive and the total fuel supply amount (Rtotal) is decreased.

At this time, in order to prevent the total fuel supply amount (Rtotal) from increasing too much or becoming zero when the generated power of the fuel cell stack 100 is deficient, a saturation process is performed (step 213). Here, this saturation process is such that when the total fuel supply amount (Rtotal) is less than the minimum total fuel supply amount (Rtotal _min=n×Ri min), Rtotal is set to the Rtotal _min and when the total fuel supply amount (Rtotal) is more than the maximum total fuel supply amount (Rtotal _max = n × Ri max), Rtotal is set to the Rtotal _max. When the total fuel supply amount (Rtotal) is changed, each fuel supply amount (Ri) (i = 1 to n) supplied to each of the fuel cells 110 (1) to 110(n) is changed by the same ratio. Then, the operation is returned to the step 202.

Then, the fuel cell system repeats the operations after the step 202 to conform the generated power (P) of the fuel cell stack 100 to the required power (Preq) while the fuel supply amount (Ri) (i = 1 to n) to each fuel cell is adjusted so as to reduce the voltage variations of the fuel cells 110 (1) to 110 (n) .

As described above, the fuel cell system according to this embodiment controls the fuel supply amount (Ri) to each fuel cell according to the voltage variation of each of the fuel cells 110(1) to 110(n). Thus, even when there is some variations in characteristics of fuel cells or in characteristics of the fuel supply devices, the voltage variation of the fuel cell can be reduced or eliminated. Therefore, the voltage of the fuel cell can be prevented from being lowered and the fuel cell is prevented from deteriorating. Furthermore, the generated power of the fuel cell stack is prevented from being lowered due to decrease of the current of the fuel cell.

According to the fuel cell system in this embodiment 1 of the present invention, the required power by the load device 109 and the generated power of the fuel cell stack 100 can be conformed to each other as much as possible by managing the total fuel supply amount according to the difference between the required power and the generated power. When the minimum value of the voltages of the fuel cells 110(1) to 110(n) becomes smaller than the predetermined value, the fuel cell can be prevented from deteriorating beforehand by increasing the voltage of the fuel cell stack 100.

In addition, the power converter 103 in this embodiment 1 of the present invention is a DC-DC converter which controls so that the voltage of the fuel cell stack 100 is conformed to the target voltage. Instead, the power converter 103 may be a DC-DC converter which controls so that a current of the fuel cell stack may be conformed to a target current. In this case, at the step 222 in Fig. 2, the controller 108 decreases the target current of the fuel cell stack (target current←target current - k4 × em) (k4 is a predetermined positive constant) instead of increasing the target voltage of the fuel cell stack 100.

In addition, although each of the fuel supply devices of which number is the same as the number of the fuel cells supplies the fuel to each of the fuel cells in the embodiment 1 of the present invention, the number of the fuel supply devices is not limited to the above. If the fuel can be individually supplied based on the fuel supply amount corresponding to each of a plurality of fuel cells, the number of fuel supply devices may be any number. For example, one fuel supply device may individually supply the fuel to the plurality of fuel cells which constitute the fuel cell stack.

<<Embodiment 2>>

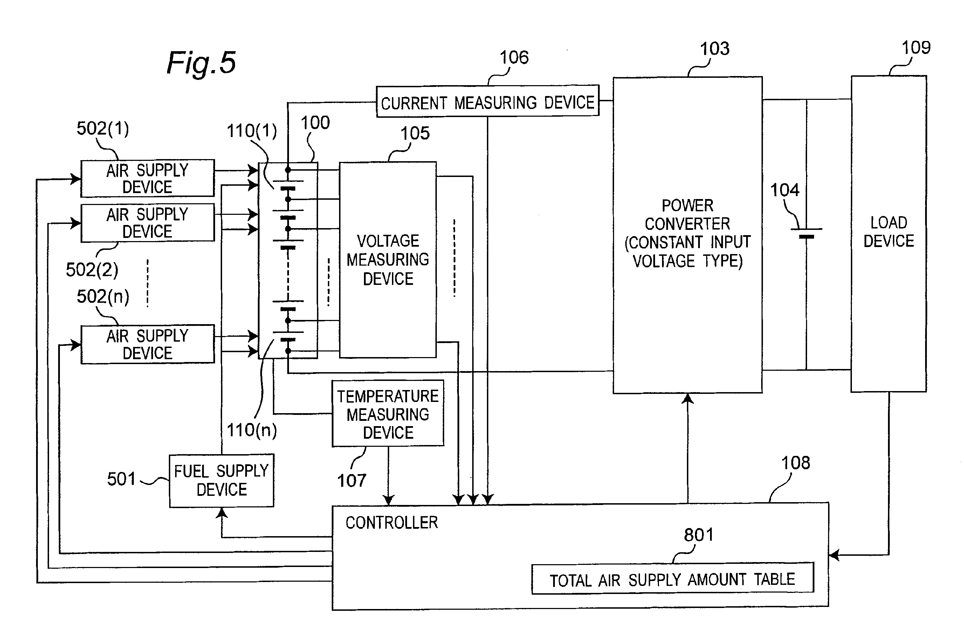

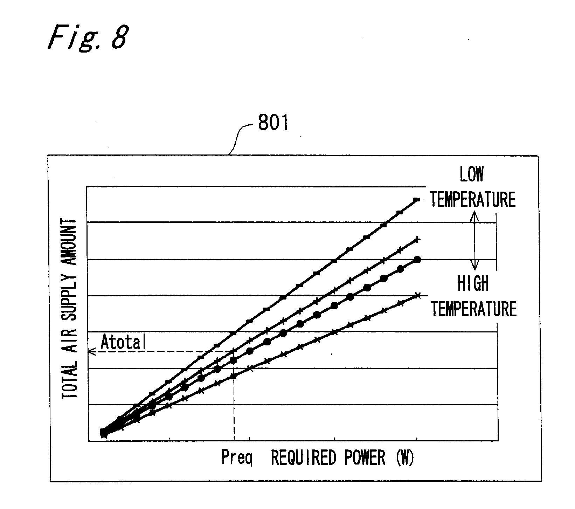

A fuel cell system according to an embodiment 2 of the present invention will be described with reference to Fig. 5 to Fig. 9. Fig. 5 is a diagram showing a configuration of the fuel cell system in the embodiment 2 of the present invention. In Fig. 5, the same reference numerals denote the same components as those in Fig. 1 and their detailed descriptions will be omitted. The fuel cell system in the embodiment 2 has air supply devices 502(1) to 502(n) (n is two or more positive integers) for supplying air to fuel cells 110(1) to 110(n), respectively and one fuel supply device 501 for supplying fuel uniformly to each fuel cell. The controller 108 has a total air supply amount table 801 (Fig. 8). Except for the above configuration, the fuel cell system in the embodiment 2 is the same as that of the embodiment 1.

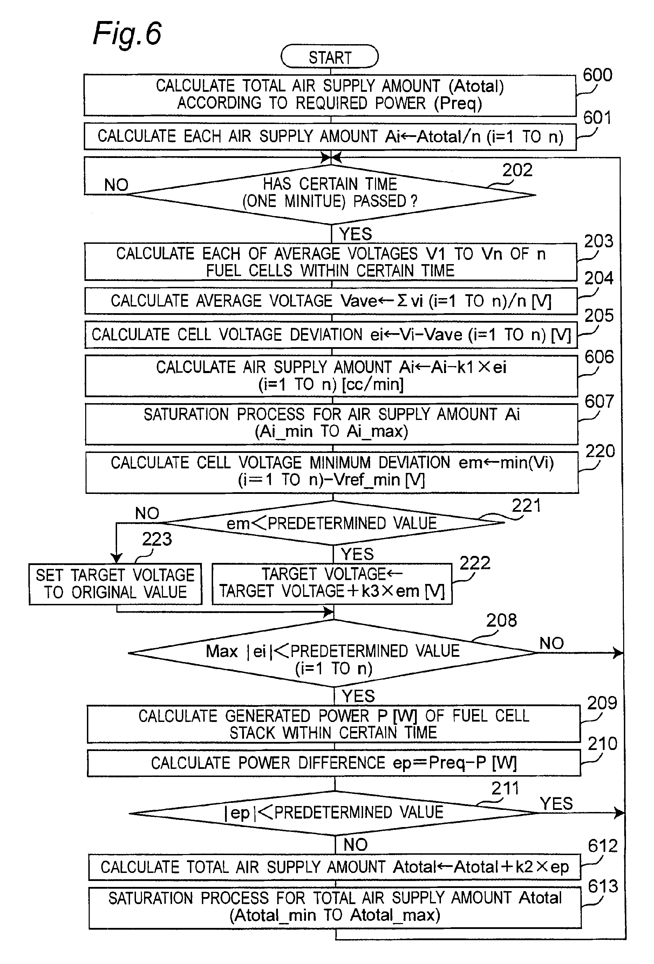

The fuel cell system according to the embodiment 2 controls an air supply amount to reduce voltage variations of the fuel cells 110(1) to 110(n), and stabilize a generated power of the fuel cell stack. The fuel cell system prevents the fuel cell from deteriorating when voltage variations of the fuel cells 110(1) to 110(n) due to a variation in air supply amount are generated. A detailed method of determining the air supply amount to each of the fuel cells 110(1) to 110 (n) is shown in Fig. 6. Fig.6 will be described below.

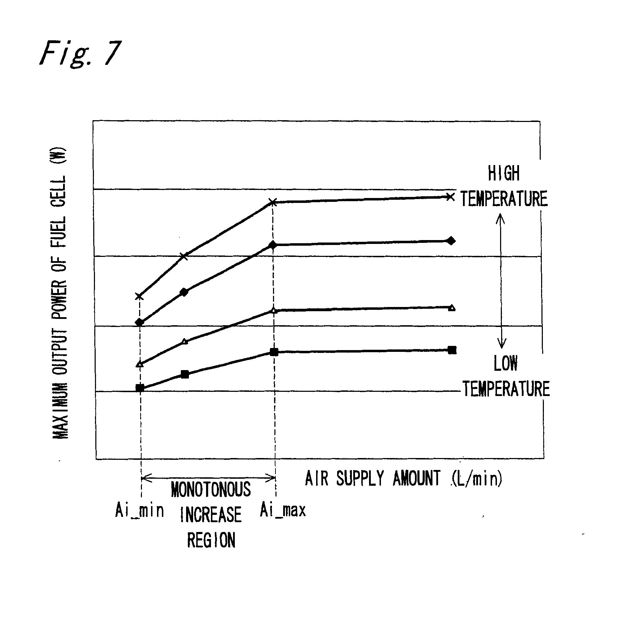

Fig. 7 is a view showing a relation between an air supply amount supplied to the fuel cell and a maximum output power of the fuel cell in the fuel cell system according to the embodiment 2 of the present invention. In Fig. 7, a horizontal axis shows the air supply amount (L/min) and a vertical axis shows the maximum output power (W). As shown in Fig. 7, until the air supply amount reaches a predetermined air supply amount (Ai_max), when the air supply amount to each of the fuel cells 110(1) to 110(n) is increased, the maximum output power of the fuel cell is monotonously increased.

According to the fuel cell system in the embodiment 2 of the present invention, air is supplied to each of fuel cells 101 (1) to 101(n) within this monotonous increase region (Ai_min ≤ air supply amount ≤ Ai_max).

Fig. 8 is the total air supply amount table 801 showing a relation between the required power and the total air supply amount in the fuel cell system according to the embodiment 2 of the present invention. In Fig. 8, a horizontal axis shows the required power by the load device 109 and a vertical axis shows the total air supply amount to be supplied to the fuel cell stack 100. The relation between the required power and the total air supply amount is varied according to a temperature. The lower the temperature of the fuel cell stack 100 is, the more the total air supply amount for satisfying the required power by the load device 109 is.

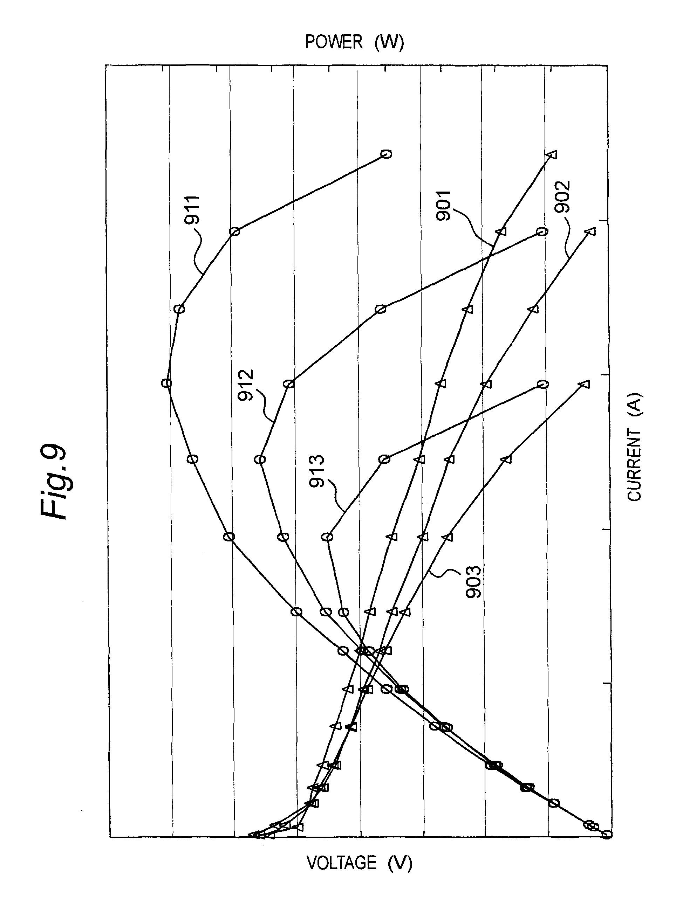

Fig. 9 is a view showing a current-voltage characteristic 901 (the air supply amount is great), a current-voltage characteristic 902 (the air supply amount is middle), a current-voltage characteristic 903 (the air supply amount is small), a current-power characteristic 911 (the air supply amount is great), a current-power characteristic 912 (the air supply amount is middle), and a current-power characteristic 913 (the air supply amount is small) of the fuel cell according to the variation of air supply amount as parameters. In Fig. 9, a horizontal axis, a left vertical axis, and a right vertical axis show a current (A), a voltage (V) and a power (W), respectively. In Fig. 9, the fuel supply amount to the fuel cell is 2cc/min. It is found from Fig. 9 that when the air supply amount to be supplied to each of the fuel cells 110(1) to 110(n) is reduced, the voltage and power outputted from the fuel cell is lowered.

Fig.6 is described. Fig. 6 is a flowchart showing control algorithm of the fuel cell system according to the embodiment 2 of the present invention. The fuel cell system in the embodiment 2 determines the air supply amount to be supplied to each of the fuel cells 110(1) to 110(n) as shown in the flowchart of Fig. 6. In Fig. 6, the same numerals denote the same steps as in Fig. 2.

First, the controller 108 receives a required power (Preq) from the load device 109 and a temperature measure value (T1) of the fuel cell stack 100 from the temperature measuring device 107 and calculates a total air supply amount (Atotal) with reference to the total fuel supply amount table 801 (step 600). At this time, the controller 108 determines a target voltage V0 of the fuel cell stack 100 based on the required power and outputs the target voltage V0 to the power converter 103.

The controller 108 sets a value obtained by dividing the total air supply amount (Atotal) by the number (n) of the fuel cells to an initial value of the air supply amount (Ai) supplied to each fuel cell (Ai←Atotal/n (i = 1 to n)) (step 601).

The air supply devices 502(1) to 502(n) supply air to the fuel cells 110(1) to 110(n), respectively according to the air supply amount (Ai) (i = 1 to n) set by the controller 108. The fuel supply device 501 supplies fuel to each of the fuel cells 110(1) to 110(n) uniformly according to a constant fuel supply amount set by the controller 108. Each of the fuel cells 110(1) to 110(n) is supplied with the fuel and air and generates a power. The power converter 103 receives the voltage of the fuel cell stack 100 and controls so that the voltage of the fuel cell stack becomes the target voltage.

Then, it is determined whether a certain time (one minute in the embodiment 2) has passed or not (step 202). Until the certain time has passed, the air supply amount of the initial value is supplied to each fuel cell. When the certain time has passed, respective average voltages (V1 to Vn) of the fuel cells within the certain time are calculated (step 203). Then, an average voltage (Vave) of n voltages (V1 to Vn) is calculated (step 204). A cell voltage deviation (ei) which is a difference between each of the voltages (Vl to Vn) and the average voltage (Vave) is calculated every fuel cell (ei = Vi - Vave (i = 1 to n)) (step 205).

Then, the air supply amount (Ai) to each fuel cell is calculated again based on the cell voltage deviation (ei) (Ai = Ai - k1 x ei) (step 606). Here k1 designates a predetermined positive constant [L/min/V]. The higher the voltage of the fuel cell is, the smaller the fuel supply amount (Ri) is. The lower the voltage of the fuel cell is, the greater the air supply amount (Ai) is. As a result, while the total air supply amount (Atotal) to all of the fuel cells is not changed, the air supply amount (Ai) to each fuel cell can be changed depending on each fuel cell voltage deviation (ei). The reason why the total air supply amount is not changed at the step 606 is shown by the following equation.

$$\Sigma Ai = \Sigma Ai - k1\Sigma ei$$

$$= \Sigma Ai - k1(\Sigma Vi - nVave)$$

$$= \Sigma Ai - k1 \times 0$$

$$= \Sigma Ai$$

$$= Atotal$$

A saturation process of the air supply amount (Ai) is performed so that the air supply amount (Ai) is controlled within the monotonous increase region (which is a region in which the generated power of the fuel cell is monotonously increased according to increase of the air supply amount to the fuel cell (Fig. 7)) (step 607). In this saturation process, when the air supply amount (Ai) is less than a minimum air supply amount (Ai_min), Ai is set to the Ai_min and when the air supply amount (Ai) is more than a maximum air supply amount (Ai_max), Ai is set to the Ai_max. The reason is such that even when the air of more than the maximum air supply amount (Ai_max) is supplied to the fuel cell, the generated power is not increased. The air supply devices 502(1) to 502(n) supply the air to the fuel cells 110(1) to 110(n), respectively based on the air supply amount (Ai) (i = 1 to n) after the saturation process.

Here, in order to prevent the fuel cell from being damaged when the minimum value of the voltages of the fuel cells 110(1) to 110(n) is less than a predetermined value, the controller 108 resets the target voltage of the fuel cell stack 100 to output to the power converter 103 (steps 220 to 223).

First, a cell voltage minimum deviation (em) between the minimum value (min(Vi) (i = 1 to n)) of the voltages of the fuel cells 110(1) to 110(n) and a predetermined value (Vref_min) is calculated (em ← min (Vi) (i = 1 to n) - Vref_min) (step 220). Then, it is determined whether the cell voltage minimum deviation (em) is smaller than a predetermined value or not (step 221). When the cell voltage minimum deviation is smaller than the predetermined value, the target voltage of the fuel cell stack 100 is increased (target voltage←target voltage + k3 × em) (step 222). Here, k3 is a predetermined coefficient. Thus, the controller 108 increases the target voltage to cause the power converter 103 to increase the voltage of the fuel cell stack 100 such that the voltage coincides with the new target voltage set at the step 222. Thus, it is prevented that the voltage of the fuel cell becomes less than the predetermined value and over discharge is generated and the electrolyte film of the fuel cell is damaged or deteriorates. When the cell voltage minimum deviation is more than the predetermined value, the target voltage is set to the original value V0 again (step 223).

Next, it is determined whether a maximum value of the absolute values of n voltage deviations (ei (i = 1 to n)) which shows the voltage variations of the fuel cells 110(1) to 110(n) is smaller than a predetermined value or not (step 208). When the maximum value of the absolute values of n voltage deviations is not less than the predetermined value, it is determined that the voltage variations of n fuel cells are large and the operation is returned to the step 202. The operations from the steps 202 to 223 are repeated until the voltage variations of the fuel cells 110(1) to 110(n) are reduced.

Meanwhile, when the maximum value of the absolute values of n voltage deviations is smaller than the predetermined value, it is determined that the voltage variations of the fuel cells 110(1) to 110(n) are reduced, and a generated power (P) (Power P= total voltage (Σvi) x current) of the fuel cell stack 100 within a latest predetermined time is calculated (step 209).

Then, a power difference (ep) between the required power (Preq) of the load device 109 and the generated power (P) of the fuel cell stack 100 is calculated (step 210). Then, it is determined whether an absolute value of the power difference (ep) is smaller than a predetermined value or not (step 211). When the absolute value of the power difference (ep) is smaller than the predetermined value, it is determined that the present generated power is satisfactory and the operation is returned to the step 202.

When the absolute value of the power difference (ep) is not less than the predetermined value, it is determined that the total air supply amount is excessive or deficient, and the total air supply amount is calculated again according to the power difference (Atotal←Atotal + k2 × ep) (step 612). Here, k2 is a predetermined positive constant [L/min/V]. More specifically, when the generated power (P) of the fuel cell stack 100 is smaller than the required power (Preq), it is determined that the air supply amount is deficient, and the total air supply amount (Atotal) is increased. Meanwhile, when the generated power (P) is greater than the required power (Preq), it is determined that the air supply amount is excessive, the total air supply amount (Atotal) is decreased.

At this time, in order to prevent the total air supply amount (Atotal) from increasing too much or becoming zero when the generated power of the fuel cell stack 100 is deficient, a saturation process is performed (step 613). In this saturation process, when the total air supply amount (Atotal) is less than the minimum total air supply amount (Atotal_min=n×Ai min), Atotal is set to the Atotal_min and when the total air supply amount (Atotal) is more than the total maximum air supply amount (Atotal_max=n×Ai max), Atotal is set to the Atotal_max. When the total air supply amount (Atotal) is changed, each air supply amount (Ai) (i = 1 to n) to each of the fuel cells 110(1) to 110(n) is changed by the same ratio. Then, the operation is returned to the step 202.

Then, the fuel cell system repeats the operations after the step 202 to conform the generated power (P) of the fuel cell stack 100 to the required power (Preq) while the air supply amount (Ai) (i = 1 to n) to each fuel cell is adjusted so as to reduce the voltage variations of the fuel cells 110(1) to 110(n).

As described above, the fuel cell system according to this embodiment controls the air supply amount (Ai) to each fuel cell according to the voltage variation of each of the fuel cells 110(1) to 110(n). Thus, even when there are some variations in characteristics of the fuel cells or in characteristics of the air supply devices, the voltage variations of the fuel cells can be reduced or eliminated. Thus, the voltage of the fuel cell can be prevented from being lowered and the fuel cell is prevented from deteriorating. Furthermore, the generated power of the fuel cell stack is prevented from being lowered due to decrease of the current of the fuel cell.

According to the fuel cell system in this embodiment 2 of the present invention, the required power by the load device 109 and the generated power of the fuel cell stack 100 can be conformed to each other as much as possible by managing the total air supply amount according to the difference between the required power and the generated power. When the minimum value of the voltages of the fuel cells 110(1) to 110(n) becomes smaller than the predetermined value, the fuel cell can be prevented from deteriorating beforehand by increasing the voltage of the fuel cell stack.

In addition, the power converter 103 in this embodiment 2 of the present invention is a DC-DC converter which controls so that the voltage of the fuel cell stack 100 is conformed to the target voltage. Instead, the power converter 103 may be a DC-DC converter which controls so that a current of the fuel cell stack may be conformed to a target current. In this case, at the step 222 in Fig. 6, the controller 108 decreases a target current of the fuel cell stack (k4 is a predetermined positive constant) instead of increasing the target voltage of the fuel cell stack 100 (target current←target current -k4 $\times$ em).

In addition, although each of the air supply devices of which number is the same as that of the fuel cells supply the fuel to each of the fuel cells in the embodiment 2 of the present invention, the number of the air supply devices is not limited to the above. If the air can be individually supplied based on the air supply amount corresponding to each of a plurality of fuel cells, the number of air supply devices may be any number. For example, one air supply device may individually supply the fuel to the plurality of fuel cells which constitute the fuel cell stack.

In addition, according to the fuel cell system in the embodiment 1 of the present invention, the fuel supply amount is set for each fuel cell, and the air supply amount to each of all of the fuel cells is the same. According to the fuel cell system in the embodiment 2 of the present invention, the air supply amount is set for each fuel cell, and the fuel supply amount to each of all of the fuel cells is the same. Meanwhile, these may be combined such that both fuel and air supply amounts are set for each fuel cell.

According to the fuel cell system in the present invention, a stable output current can be provided from a fuel cell stack which has a plurality of fuel cells connected in series and provides a desired output voltage. Thus, the fuel cell stack in which the plurality of fuel cells are stacked can be miniaturized, so that a compact fuel cell system which is suitable for a power supply of a portable electronic device can be realized.

INDUSTRIAL APPLICABILITY

The fuel cell system according to the present invention can be useful as a power supply of a portable electronic device and the like.

**Claims**

1. A fuel cell system comprising:

    a fuel cell stack having a plurality of fuel cells connected in series;
    a fuel supply device that supplies fuel to each of the fuel cells based on a fuel supply amount which is a target value;
    an air supply device that supplies air to each of the fuel cells based on an air supply amount which is a target value; and
    a controller that determines the fuel supply amount and the air supply amount based on a power which is required by a load device and a voltage of each of the fuel cells; wherein
    the controller sets at least one of the fuel supply amount and the air supply amount for each of the fuel cells based on the voltage of each of the fuel cells so that a voltage variation of each of the fuel cells is minimized, and
    the fuel supply device supplies fuel to each of the fuel cells based on the fuel supply amount of each of the fuel cells, and/or the air supply device supplies air to each of the fuel cells based on the air supply amount of each of the fuel cells.

2. The fuel cell system according to claim 1, wherein
    the controller calculates a voltage deviation which is a difference between a voltage of each of the fuel cells and an average value of the voltages of the plurality of fuel cells every predetermined time,
    increases or decreases the fuel supply amount of each of the fuel cells according to the voltage deviation while keeping a total fuel supply amount unchanged,
    and/or increases or decreases the air supply amount of each of the fuel cells according to the voltage deviation while keeping a total air supply amount unchanged.

3. The fuel cell system according to claim 2, further comprising a temperature measuring device that measures a temperature of the fuel cell stack, and

the controller has a total fuel supply amount table for calculating the total fuel supply amount and/or a total air supply amount table for calculating the total air supply amount based on the temperature of the fuel cell stack and the required power of the load device, wherein

the controller receives the temperature of the fuel cell stack from the temperature measuring device and the required power from the load device, and calculates the total fuel supply amount and/or the total air supply amount based on the total fuel supply amount table and/or the total air supply amount table, and sets an amount which is obtained by dividing the total fuel supply amount and/or the total air supply amount by the total number of the fuel cells to an initial value of the fuel supply amount and/or the air supply amount of each of the fuel cells, and

the controller repeats every predetermined time calculating the voltage deviation which is the difference between the voltage of each of the fuel cells and the average value of the voltages of the fuel cells, and obtaining the target fuel supply amount and/or the target air supply amount by subtracting a value obtained by multiplying the voltage deviation by a predetermined value, from the fuel supply amount and/or the air supply amount of each of the fuel cells.

4. The fuel cell system according to claim 1, wherein

the controller calculates a voltage deviation which is a difference between a voltage of each of the fuel cells and an average value of the voltages of the plurality of fuel cells every predetermined time, and

when a maximum value of absolute values of the voltage deviations of the plurality of fuel cells becomes smaller than a predetermined value, the controller calculates a generated power of the fuel cell stack within a predetermined time, and increases or decreases a total fuel supply amount or a total air supply amount according to a power difference between the generated power and the required power from the load device.

5. The fuel cell system according to claim 4, wherein the total fuel supply amount or the total air supply amount is increased or decreased by adding a value obtained by multiplying the power difference between the generated power of the fuel cell stack and the required power of the load device by a predetermined value, to the total fuel supply amount or the total air supply amount.

6. The fuel cell system according to claim 1, further comprising a power converter that controls so that a voltage or current of the fuel cell stack is equivalent to a target voltage or target current determined by the controller, and supplies a power outputted from the fuel cell stack to the load device, wherein

when a minimum voltage value of the voltages of the plurality of fuel cells is smaller than a predetermined voltage value, the controller increases the target voltage to cause the power converter to increase the voltage of the fuel cell stack, or the controller decreases the target current to cause the power converter to decrease the current of the fuel cell stack.

7. The fuel cell system according to claim 6, wherein when the minimum value of the voltages of the plurality of fuel cells is smaller than the predetermined voltage value,

the controller adds a value obtained by multiplying a voltage difference between the minimum voltage value and the predetermined voltage value by a predetermined value, to the target voltage and the power converter increases the voltage of the fuel cell stack based on the target voltage, or

the controller subtracts a value obtained by multiplying the voltage difference between the minimum voltage value and the predetermined voltage value by a predetermined value from the target current and the power converter decreases the current of the fuel cell stack based on the target current.

*Fig.1*

## Fig.2

```
                    ( START )
```

CALCULATE TOTAL FUEL SUPPLY AMOUNT (Rtotal)
ACCORDING TO REQUIRED POWER (Preq) — 200

CALCULATE EACH FUEL SUPPLY AMOUNT $R_i \leftarrow Rtotal/n$ (i=1 TO n) — 201

HAS CERTAIN TIME
(ONE MINITUE) PASSED ? — 202    NO

YES

CALCULATE EACH OF AVERAGE VOLTAGES V1 TO Vn OF n
FUEL CELLS WITHIN CERTAIN TIME — 203

CALCULATE AVERAGE VOLTAGE $Vave \leftarrow \Sigma vi$ (i=1 TO n)/n [V] — 204

CALCULATE CELL VOLTAGE DEVIATION $e_i \leftarrow V_i - Vave$ (i=1 TO n) [V] — 205

CALCULATE FUEL SUPPLY AMOUNT $R_i \leftarrow R_i - k1 \times e_i$
(i=1 TO n) [cc/min] — 206

SATURATION PROCESS FOR FUEL SUPPLY AMOUNT Ri
(Ri_min TO Ri_max) — 207

CALCULATE CELL VOLTAGE MINIMUM DEVIATION $em \leftarrow min(V_i)$
(i=1 TO n)-Vref_min [V] — 220

$em <$ PREDETERMINED VALUE — 221    NO

YES

SET TARGET VOLTAGE
TO ORIGINAL VALUE — 223

TARGET VOLTAGE $\leftarrow$
TARGET VOLTAGE + k3 $\times$ em [V] — 222

$Max |e_i| <$ PREDETERMINED VALUE
(i=1 TO n) — 208    NO

YES

CALCULATE GENERATED POWER P [W] OF FUEL CELL
STACK WITHIN CERTAIN TIME — 209

CALCULATE POWER DIFFERENCE $ep = Preq-P$ [W] — 210

$|ep| <$ PREDETERMINED VALUE — 211    YES

NO

CALCULATE TOTAL FUEL SUPPLY AMOUNT $Rtotal \leftarrow Rtotal + k2 \times ep$ — 212

SATURATION PROCESS FOR TOTAL FUEL SUPPLY AMOUNT Rtotal
(Rtotal_min TO Rtotal_max) — 213

*Fig. 3*

# Fig. 4

401

Fig.5

## Fig.6

START

CALCULATE TOTAL AIR SUPPLY AMOUNT (Atotal)
ACCORDING TO REQUIRED POWER (Preq) — 600

CALCULATE EACH AIR SUPPLY AMOUNT Ai←Atotal/n (i=1 TO n) — 601

HAS CERTAIN TIME
(ONE MINITUE) PASSED ? — 202
NO / YES

CALCULATE EACH OF AVERAGE VOLTAGES V1 TO Vn OF n
FUEL CELLS WITHIN CERTAIN TIME — 203

CALCULATE AVERAGE VOLTAGE Vave←Σvi (i=1 TO n)/n [V] — 204

CALCULATE CELL VOLTAGE DEVIATION ei←Vi-Vave (i=1 TO n) [V] — 205

CALCULATE AIR SUPPLY AMOUNT Ai←Ai-k1×ei
(i=1 TO n) [cc/min] — 606

SATURATION PROCESS FOR AIR SUPPLY AMOUNT Ai
(Ai_min TO Ai_max) — 607

CALCULATE CELL VOLTAGE MINIMUM DEVIATION em←min(Vi)
(i=1 TO n)-Vref_min [V] — 220

em<PREDETERMINED VALUE — 221
NO / YES

SET TARGET VOLTAGE
TO ORIGINAL VALUE — 223

TARGET VOLTAGE←
TARGET VOLTAGE+k3×em [V] — 222

Max |ei|<PREDETERMINED VALUE
(i=1 TO n) — 208
YES / NO

CALCULATE GENERATED POWER P [W] OF FUEL CELL
STACK WITHIN CERTAIN TIME — 209

CALCULATE POWER DIFFERENCE ep=Preq-P [W] — 210

|ep|<PREDETERMINED VALUE — 211
NO / YES

CALCULATE TOTAL AIR SUPPLY AMOUNT Atotal←Atotal+k2×ep — 612

SATURATION PROCESS FOR TOTAL AIR SUPPLY AMOUNT Atotal
(Atotal_min TO Atotal_max) — 613

## Fig. 7

*Fig. 8*

801

TOTAL AIR SUPPLY AMOUNT

LOW TEMPERATURE

HIGH TEMPERATURE

Atotal

Preq   REQUIRED POWER (W)

EP 1 793 440 A1

## Fig.9

| **INTERNATIONAL SEARCH REPORT** | International application No. |
|---|---|
| | PCT/JP2005/015428 |

**A. CLASSIFICATION OF SUBJECT MATTER**
*H01M8/04* (2006.01)

According to International Patent Classification (IPC) or to both national classification and IPC

**B. FIELDS SEARCHED**

Minimum documentation searched (classification system followed by classification symbols)
*H01M8/04* (2006.01)

Documentation searched other than minimum documentation to the extent that such documents are included in the fields searched

| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-164068 A (Denso Corp.), 07 June, 2002 (07.06.02), Full text (Family: none) | 1-7 |
| Y | JP 63-291364 A (Toshiba Corp.), 29 November, 1988 (29.11.88), Full text (Family: none) | 1-7 |
| Y | JP 64-30174 A (Hitachi, Ltd.), 01 February, 1989 (01.02.89), Full text (Family: none) | 1-7 |

☒ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 December, 2005 (05.12.05) | 13 December, 2005 (13.12.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
|---|
| PCT/JP2005/015428 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 8-31439 A  (Toshiba Corp.),<br>02 February, 1996 (02.02.96),<br>Full text<br>(Family: none) | 2-5 |
| Y | JP 8-171921 A  (Sanyo Electric Co., Ltd.),<br>02 July, 1996 (02.07.96),<br>Full text<br>(Family: none) | 3 |
| Y | JP 2002-343397 A  (Nissan Motor Co., Ltd.),<br>29 November, 2002 (29.11.02),<br>Full text<br>(Family: none) | 1-7 |

Form PCT/ISA/210 (continuation of second sheet) (April 2005)

**EP 1 793 440 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000208161 A
- JP 2002184443 A